# EUROPEAN PATENT SPECIFICATION

(11) **EP 1 696 606 B1**
(45) Date of publication and mention of the grant of the patent: **16.04.2008**
(21) Application number: 06002083.1
(22) Date of filing: 01.02.2006
(51) Int. Cl.: H04L 12/28

(54) **Service framework for home network**
Dienstrahmen für Heimnetze
Cadre de services pour des réseaux domotiques

(30) Priority: 23.02.2005 KR 2005014936
(43) Date of publication of application: 30.08.2006
(73) Proprietor: Samsung Electronics Co., Ltd., Suwon-si, Gyeonggi-Do (KR)
(72) Inventor: Kim, Kyle, Yeongtong-gu, Suwon-si, Gyeonggi-do (KR); Park, In-ho, Yeongtong-gu Yeongtong-gu Suwon-si Gyeon (KR); Lee, Sang-ho, Dongjak-gu, Seoul (KR)
(74) Representative: Grünecker, Kinkeldey, Stockmair & Schwanhäusser Anwaltssozietät

(56) References cited:
- WO-A-20/05003987
- US-A- 6 052 750
- US-A1- 2004 213 409
- US-B1- 6 584 507

## Description

### BACKGROUND OF THE INVENTION

### 1. Field of the Invention

The present invention relates to a home network, and in particular, relates to a structure of a service framework for providing artificial service and a method for using the same.

### 2. Description of the Related Art:

The term home network system means a system which connects PCs, peripheral devices, mobile phones, home appliances, etc. in a home into one network, and controls them. As one of the structures of the home network system, a method that builds up a common virtual computing environment called a middleware for the home appliances distributed in a home and provides an application over the home appliances has been suggested.

A home network middleware provides an environment which is controlled for allowing a general user to use various devices connected to the home network in a way that they can use already existing home appliances without learning any special knowledge to use them, and also provides development of various application services of the home network, and execution platforms.

That is, the middleware enables communication among many devices in a home network. Until now, HAVi (Home AV Interoperability), UPnP (Universal Plug and Play), PLC (Power Line communication), Jini, and HWW(Home Wide Web) have been suggested as a home network middleware.

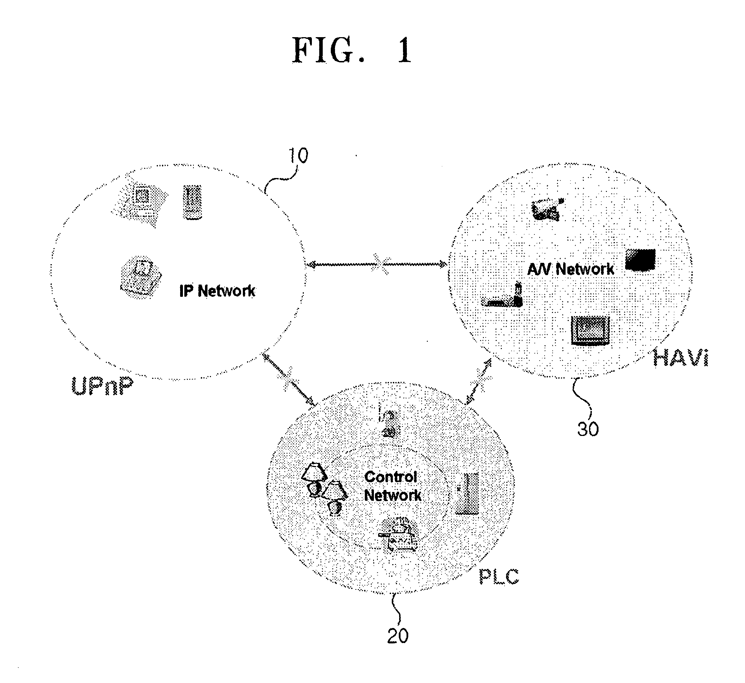

FIG. 1 shows a network system using such a conventional middleware. That is, FIG. 1 shows home devices each of which includes a middleware. A UPnP network 10 uses a software technology which can form one network without any additional equipment by expanding a plug-and-play concept for connecting PCs and peripheral devices, when all home appliances as well as the peripheral devices of PCs are arranged in a home at the same time. It is a middleware for IT devices and has a peer-to-peer architecture.

A PLC network 20 is a technology which forms the most extensive network of the existing infrastructure since power lines are provided to all homes. There is an advantage in that the cost required for forming a network is very low, and it is characterized in that when an electrical cord is inserted into the home appliances, the cord and appliances can form a simple network.

A HAVi network 30 is an AV network solution only for AV devices and uses IEEE1394 as a communication media. It is operated as a home networking middleware for controlling an image data by using API functions, and has a peer-to-peer architecture.

A Jini is a middleware having a client/server architecture using Java.

However, Jini devices have a disadvantage in that each device must be provided with JVM (Java Virtual Machine) to be integrated into a network, and therefore it is more suitable for an office environment than a home environment.

The UPnP network 10 is a solution using a HTTP server and XML, and can not be applied to all homes. The HAVi network 30 is not compatible with PCs and peripheral devices, and has a disadvantage in that standards are stipulated only for the upper OSI layers of the home appliances. Further, it focuses only on the applications and the services, and there is a problem connecting to the Internet since a lower network is limited to IEEE 1394.

A common specification is required among the makers which manufacture the devices which are connected to the same network in order to build up a home network in a home based upon the PLC network 20.

The HAVi network 30 is an AV network solution only for the AV devices using IEEE1394.

As described above, the existing middleware each forms an isolated network, and is a limited application domain for communication and recognition between the devices.

Accordingly, since the network which is integrated into one middleware type is not realized, a solution for the integrated network which takes into consideration the characteristic features of the home devices is required.

That is, a method is required for grasping the information about the entire home environment, and providing various types of services and intelligent services using the home resources.

US 6,052,750 describes a home audio/video network for generating default control parameters for devices coupled to the network, and replacing updated control parameters therewith.

### SUMMARY OF THE INVENTION

The invention provides a service framework device and a method as specified in the independent claims.

Preferred embodiments are defined by the dependent claims.

An aspect of the present invention is to provide a structure of a service framework and a method thereof which can grasp the information about the entire home environment, and provide various types of services and home resources while providing a solution for an integrated network, by taking into consideration the characteristic features of the home devices.

A service framework for integrating and controlling a plurality of middlewares including a plurality of controlled devices according to one embodiment of the present invention implemented to address the above-mentioned problems comprises a service profile registry for storing a service profile of the controlled devices, a first interface for converting a message of a middleware basis into a common message of the framework basis, and a second interface for converting the payload part of the middleware basis into a service profile and storing it into the service profile registry by analyzing the message transmitted from the first interface, and where the controlled devices are controlled by the service profile of the framework.

Another aspect of the invention includes an application which is operated by a service client of the framework, and includes a UI device for setting access and information about other home networks, so that the services of the controlled devices can be requested by the framework.

It is preferable, but not necessary, that data communication between each element of the framework and each application uses an independent standard interface (Open API : Open Application Programming Interface).

The framework receives the service profile from the second interface, and registers it to the service profile registry. A service admin for processing the functions such as creation, correction, deletion and search of the service profile is further included so that the services of the controlled devices can be controlled by the service profile of the service admin.

Further, in a case that a device admin for setting virtual devices which are controlled by the service profile of the framework, and generating and controlling a virtual device list including the virtual devices is further included and thereby the services are provided, it is possible for the device admin to read the service profile of the virtual devices from the service profile registry and to drive the framework by executing the services.

It is preferable, but not necessary, that the service admin monitors the home situations in a real-time basis through an environment sensor, accumulates various environment data, analyzes and diagnoses the data on a real-time basis, derives a service information for driving the controlled devices, registers the service profile based on the service information for providing the intelligent services to the service profile registry, and thereby provides the intelligent services.

In the service admin, if a service for the service profile is requested, the second interface converts the data part (payload) of the profile basis into a data of the middleware basis. The first interface receives the converted data, and converts it into a message of the middleware basis. Thereby, the controlled devices are controlled by the middleware.

On the other hand, a method for controlling a home network including a framework for integrating and controlling a plurality of middlewares including a plurality of controlled devices and the application having a UI device operated by a service client of the framework according to one embodiment of the present invention comprises a middleware message conversion step for converting a message of a middleware basis of the controlled devices into a common message of the framework basis, a middleware payload conversion step for converting the payload part of the middleware basis into a service profile by analyzing the message from the middleware message conversion step, a storage step for storing the service profile, and a control step for controlling the controlled devices by the service profile of the framework.

Data communication between each element of the framework and each application uses an independent standard interface (Open API: Open Application Programming Interface).

Further, it is preferable, but not necessary, that the present invention includes monitoring the home situations on a real-time basis through an environment sensor, accumulating various environment data, analyzing and diagnosing the data on a real-time basis, deriving a service information for driving the controlled devices, and registering the service profile based on the service information for providing the intelligent services to the service profile list, thereby enabling intelligent services to be provided.

The control operation may include setting a virtual device for each of the controlled devices which are controlled by the service profile in the framework, selecting a service profile for the virtual device and controlling the controlled devices according to the service profile.

Further, it is preferable, but not necessary, that the operation of controlling the controlled devices comprises a service profile payload conversion operation that converts a data part(payload) of a service profile basis of the controlled devices into a service profile of the middleware basis, a service profile message conversion operation that converts a message of a service profile basis of the controlled devices into a message of the middleware basis, and a control operation that controls the controlled devices with the middlewares.

### BRIEF DESCRIPTION OF THE DRAWINGS

The invention will be described in detail with reference to the following drawings showing exemplary embodiments in which like reference numerals refer to like elements, and wherein:

FIG. 1 is a view schematically showing a network system using a conventional middleware.

FIG. 2 is a view showing an exemplary structure of a service framework according to the present invention in detail.

FIG. 3 is a view explaining the flow procedure of a message in an exemplary embodiment.

### DETAILED DESCRIPTION OF THE PREFERRED EMBODIMENTS

Below, an exemplary embodiment according to the present invention will be described in detail by referring to the attached drawings.

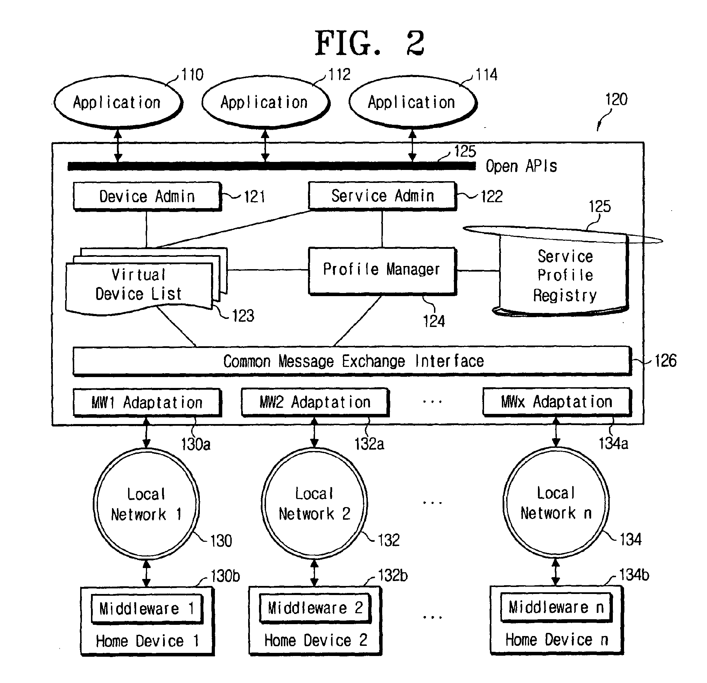

FIG. 2 is a diagram schematically showing a service framework structure according to the present invention.

As is shown, a home network 100 according to an embodiment of the present invention includes an application, 110, a service framework device 120, a plurality of local networks 130, 132, 134, and a home device group 130b, 132b, 134b each of which includes a middleware.

The applications 110, 112, 114 are each operated by a client of the service framework 120, and includes an UI (User Interface) device having a graphic user interface connected to a home network for setting access and information about other middlewares and home devices connected to each of those middlewares. It is designed to exchange information with multiple home service applications provided to the UI device, operate according to the service types and functions defined in the framework and request a service to a device included in a different middleware by utilizing a service profile in the framework.

The local networks 130, 132, 134 are designed such that the home device groups 130b, 132b, 134b, each of which includes the middleware, are connected to each other. At this time, if each of the home device groups 130b, 132b, 134b is suitable for the middleware type, there are no problems. That is, according to the present embodiment, the local networks 130, 132, 134 are characterized in that the operations performed by the same middleware are compatible and thereby ensured. Therefore, each of the local networks 130, 132, 134 may be a UPnP network or a PLC network or a HAVi network of FIG. 1.

The service framework 120 decodes and generates a message for the elements necessary for mutual communication between the local networks 130, 132, 134 and the applications 110, 112, 114.

The service framework 120 includes a device admin 121, a service admin 122, a virtual device list 123, a service profile manager 124, a common message exchange interface 126, and a middleware adaptation layer 130a, 132a, 134a.

The service admin 122 controls and manages each service based upon a service list which is converted into a common profile of the service framework 120 by using a discovery-information of each device. That is, a service profile is created according to each virtual device so that controllable services and functions are provided by the service framework 120. Then, the service profile is built up in a service profile registry 125 through the service profile manager 124, and the device is designed to enable each home device to be controlled according to the service profile. Further, it is designed to process the functions such as creation, correction, deletion and search of each service profile of a service profile manager 124.

The service profile registry 125 forms a mapping table for connection with a real service by using a service profile of a Meta data format defined in the framework of the present invention.

The service profile manager 124 manages a service profile of home devices and virtual devices, and operates as an interface between service profile registry 125 and service admin 122 in order to perform creation, correction, deletion and search functions of a service profile.

The device admin 121 controls and manages each service based upon a service list which is converted into a common profile of the service framework 120 by using a discovery-information of each device. That is, a virtual device is generated and a virtual device list including the virtual devices is created so that each device is controlled in the service framework 120.

Further, the virtual device is operated by the service profile which is provided by the service admin 122 in the service framework. Therefore, the device admin is designed to perform creation, correction, deletion and search of more than one virtual device list used in mapping the services which home devices will actually provide for description of the device.

In each middleware adaptation layer 130a, 132a, 134a, each middleware is operated by a control point. Further, for each middleware, the middleware adaptation layer operates as a first interface which converts the message according to the specific protocols of each middleware into a common message of the service framework 120. That is, the message part of the specific protocols of each middleware is converted into a common message of the service framework 120, so that it is formed separately from each middleware. The data part, which is the payload, is transmitted to a common message exchange interface 126 while maintaining the protocol features of each middleware. For example, the discovery-information of each home device is converted.

The common message exchange interface 126 is used to transmit a service profile related to a predetermined service based upon the service profile of the virtual device. In particular, if a message is received from the middleware adaptation layer 130a, 132a, 134a, it searches a service profile manager 124 to convert the payload part having a middleware basis, and operates as a second interface constituting a service profile which is a common file in the service framework 120. Further, the service admin 122 reflects the information related to the service profile manager 124, so that the virtual device can reflect the present state of the home device.

Conversion operations are performed by the first interface including the middleware adaptation layer 130a, 132a, 134a, and a common message exchange interface 126, respectively in the present invention.

That is, if all data is received through the local network in a general interface (a middleware including UPnP), a payload is analyzed in the procedure corresponding to a message. Therefore, according to the present embodiment, the common message exchange interface 126 performs the payload analysis.

Since the message part is the same but the payload part is different in data received from different devices within the same middleware group, the structure as described above is formed. Therefore, there is an advantage in that only the service profile list need to be updated periodically by managing the payload part when adding a new device.

At this time, the devices belonging to each middleware are set to a virtual device which the application 110, 112, 114 can drive by a common file of the service framework 120, and then are registered to the virtual device list 123.

Independent standard interface (open APIs 127) is used when the application 110, 112 and 114 request services of the home devices of each local network in the service framework 120.

Below, a message flow of the service framework according to one exemplary embodiment of the present invention will be explained by using the structure as described above.

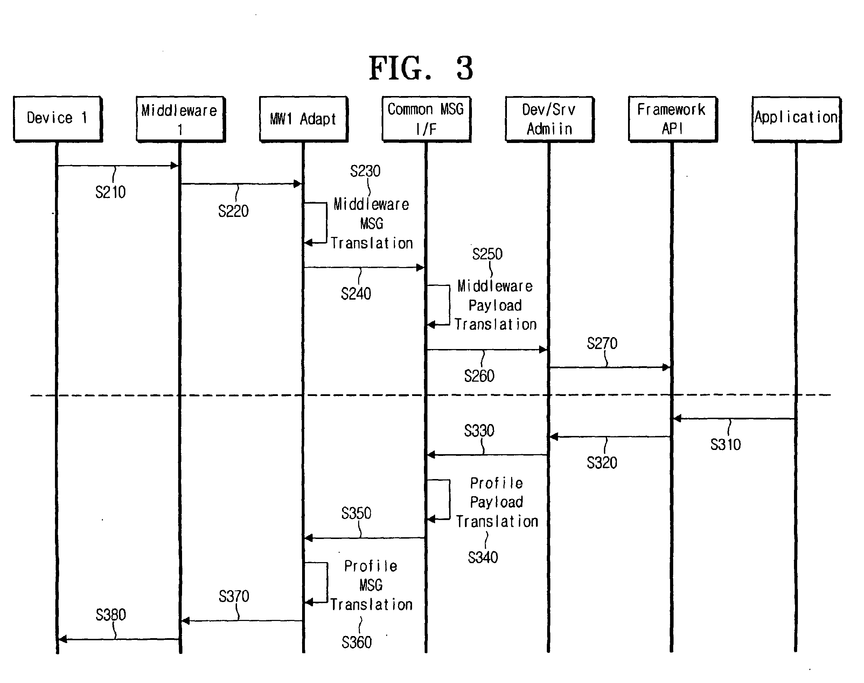

FIG. 3 is a view showing the procedures for processing a home device and a message related to the home device. The portion above the dotted line shows the procedures for registering each home device, and the lower part shows the procedures through which services are provided by a real home device when services are requested.

For the sake of clarity, in the present invention, it is assumed that the home device 1 of the middleware 1 including the UPnP network of the local network 1 (130)_ is connected to a network.

Once a device is connected to the local network 1 (130), and a suitable address is designated, the search operation is performed. Then, the service which the device provides is converted into a protocol (UPnP Device Profile) of the middleware 1 on the local network (S210), and the middleware message (MSG) and a payload are transmitted. The main information related to a general device or a service which the device provides includes a type, an identifier, and a pointer of an explanation manual of XML apparatus.

In the step S210, if the middleware message (MSG) notifying the device and the service and the payload are transmitted to the MW 1 adaptation layer 130a through the Open APIs 127 which is an inside interface of the service framework 120(S220), the MW1 adaptation layer 130a converts the middleware message (MSG) based upon the UPnP device profile into a common message provided in the service framework 120(S230). Then, the converted message is transmitted to the common message exchange interface 126 along with the payload based upon the UPnP device profile (5240).

The common message exchange interface 126 converts the payload part of the received message into the service profile provided in the service framework 120(S250), and transmits it to the device admin 121 and the service admin 122 (S270).

Then, as described above, the device admin 121 creates a virtual device according to a common file, and registers it to the virtual device list 123. The service admin 122 registers the service contents of the device to the service profile registry 125 through the service profile manager 124.

According to the processes as described above, if each network device and services are registered, each application can request the services.

Below, the step for requesting service in each application of the user interface basis operating as a client of the service framework will be explained by referring to FIG. 3.

First of all, each application 110, 112, 114 requests a service for the home device 1 to the device admin 121(S310, S320) through the independent standard interface (Open API) (Application Programming Interface: 127) provided by the service framework.

The device admin 121 searches the virtual device registered in the virtual device list for the requested home device 1. Then, if the device admin 121 requests the service profile of the searched virtual device to the service profile manager 124, the service profile manager 124 then searches the service profile for the device from the service profile registry 125 and sends it to the device admin 121. Subsequently, the device admin 121 sends the contents of the service profile to the common message exchange interface 126 (S330)

The common message exchange interface 126 which receives the service profile including a common profile of the service framework basis converts the payload of the common file type into the middleware profile message (S340), and transmits it to the MW1 adaptation layer 130a (S350).

The MW1 adaptation layer 130a converts the message of the common file type of the received message into the message of middleware profile type (S360), and transmits it to the middleware 1 (S370), thereby enabling the home device 1 to be operated according to the service profile.

According to the message processing steps, it is possible to provide intelligent services by setting the service contents including each device in a comprehensive way.

That is, various environment data are accumulated by monitoring the home situations in a real-time basis through an environment sensor, and the information is derived to drive the controlled devices by analyzing and diagnosing the information on a real-time basis. Therefore, it is possible to execute the services by registering the information as a service profile.

For example, a virtual service environment for allowing DVD to be viewed at a designated time is prepared so that the devices required for DVD viewing such as a DVD, a TV, a curtain and a lighting device can be controlled, if necessary. To be more specific, the curtain is lowered as a first step for viewing DVD, and the suitable illumination necessary for DVD viewing is requested. After completion of these operations, a service for allowing a TV to be turned on is requested, and thereby a system for executing a series of intelligent services is provided.

According to the present invention, it is possible to control the home devices easily by using the framework interface using the converter function for converting the information through the middleware interface to which each home device belongs.

Further, though the current invention is described with the device admin 121 driving the requests for services of the home devices, if the virtual device list information stored in the service profile manager 124 is used, then the service admin 122 can drive the process of providing services of the home devices.

In this way, if the service framework of the home network according to the present invention is used, a virtual home environment for a middleware-to-middleware, and all home resources is provided by managing the device profiles having different structures in an integrated way, and thereby an integration management can be realized.

Although the preferred embodiment of the present invention has been described, it will be understood by those skilled in the art that the present invention should not be limited to the described preferred embodiment, but various changes and modifications can be made within the scope of the present invention as defined by the appended claims.

## Claims

1. A service framework device (120) of a home network (100) for integrating and controlling a plurality of middlewares included in a plurality of controlled devices (130b, 132b, 134b), comprising:
a service profile registry (125) that stores a service profile of the controlled devices;
**characterized by**:
a first interface (130a, 132a, 134a) arranged for converting a message of a middleware basis into a common message of a framework basis; and
a second interface (126) arranged for converting a payload part of the middleware basis into a service profile and storing the service profile into the service profile registry by analyzing the message transmitted from the first interface,
wherein the controlled devices are controlled by the service profile of the framework device.

2. The service framework device of a home network according to claim 1, further comprising:
an application (110, 112, 114) operated by a service client of the framework device and including a user interface device arranged to set access and gather information about the plurality of middlewares including the plurality of controlled devices, so that the services of the controlled devices can be requested through the framework device.

3. The service framework device of a home network according to claim 2, wherein data communication between each element of the framework device and the application is arranged to use an independent standard interface which is an Open Application Programming Interface.

4. The service framework device of a home network according to claim 1, wherein the framework device further comprises a service administrator (122) arranged to receive the service profile from the second interface, register the service profile to the service profile registry and process functions such as creation, correction, deletion and search of the service profile, so that the controlled devices can be controlled by the service profile of the service administrator.

5. The service framework device of a home network according to claim 4, further comprising:
a device administrator (121) for setting virtual devices which are controlled by the service profile of the framework device; and
a virtual device list (123) that stores information about the virtual devices;
wherein the virtual device list is generated and controlled by the device administrator, thereby enabling the device administrator to read the service profile of the virtual devices from the service profile registry and to drive the framework device by executing the services.

6. The service framework device of a home network according to claim 4, wherein the service administrator is arranged to monitor home situations on a real-time basis through an environment sensor, accumulate various environment data, analyze and diagnose the data on a real-time basis, derive service information for driving the controlled devices, and register a service profile based on the service information into the service profile registry.

7. The service framework device of a home network according to claim 5, wherein the service administrator further comprises a service profile manager (124) which is configured to manage a service profile of the virtual device and performs functions of creation, correction, deletion and search of the service profile, so that the second interface receives the service profile, wherein the service profile manager registers the service profile into the service profile registry, reads the service profile of the corresponding virtual device from the service profile registry and transmits the service profile responding to a request of the device administrator.

8. The service framework device of a home network according to claim 6, wherein the second interface is arranged to convert, if a service for the corresponding service profile is requested by the service administrator, a payload data part of the service profile basis into a data of the middleware basis, and the first interface is arranged to receive the converted data and further convert the converted data into a message of the middleware basis so that the controlled devices are controlled by the middleware.

9. A method for controlling a home network (100) including a framework for integrating and controlling a plurality of middlewares included in a plurality of controlled devices, and an application (110, 112, 114) having a user interface device operated by a service client of the framework, comprising:
performing (S230) a middleware message conversion operation that converts a message of a middleware basis of the controlled devices into a common message of the framework basis;
performing (S250) a middleware payload conversion operation that converts a payload part of the middleware basis into a service profile by analyzing the message from the middleware message conversion step;
performing a storage operation that stores the service profile; and
performing a control operation that controls the controlled devices by the service profile of the framework.

10. The method according to claim 9, wherein data communication between each elements of the framework and each application uses an independent standard interface which is an Open Application Programming Interface.

11. The method according to claim 9, further comprising performing an operation of monitoring home situations on a real-time basis through an environment sensor, accumulating various environment data, analyzing and diagnosing the data on a real-time basis, deriving service information for driving the controlled devices, and registering a service profile based on the service information into a service profile registry.

12. The method according to claim 9, wherein the control operation includes:
setting a virtual device for each of the controlled devices which are controlled by respective service profiles in the framework;
selecting one of the respective service profiles for the virtual device; and
controlling the controlled devices according to the selected service profile.

13. The method according to claim 12, wherein the step for controlling the controlled devices comprises:
performing (S340) a service profile payload conversion operation that converts a payload data part of a service profile basis of the controlled devices into a service profile of the middleware basis;
performing (S360) a service profile message conversion operation that converts a message of a service profile basis of the controlled devices into a message of the middleware basis; and
performing a control operation that controls the controlled devices with the middlewares.

## Patentansprüche

1. Dienst-Framework-Vorrichtung (120) eines Heimnetzes (100) zum Integrieren und Steuern einer Vielzahl von Middleware-Elementen, die in einer Vielzahl gesteuerter Vorrichtungen (130b, 132b, 134b) enthalten sind, wobei sie umfasst:
ein Dienstprofil-Register (125), das ein Dienstprofil der gesteuerten Vorrichtungen speichert;
**gekennzeichnet durch**:
eine erste Schnittstelle (130a, 132a, 134a), die so eingerichtet ist, dass sie eine Nachricht einer Middleware-Basis in eine gemeinsame Nachricht einer Framework-Basis umwandelt; und
eine zweite Schnittstelle (126), die so eingerichtet ist, dass sie einen Nutzdatenteil der Middleware-Basis in ein Dienstprofil umwandelt und das Dienstprofil in dem Dienstprofil-Register speichert, indem sie die von der ersten Schnittstelle gesendete Nachricht analysiert,
wobei die gesteuerten Vorrichtungen **durch** das Dienstprofil der Framework-Vorrichtung gesteuert werden.

2. Dienst-Framework-Vorrichtung eines Heimnetzes nach Anspruch 1, die des Weiteren umfasst:
eine Anwendung (110, 112, 114), die von einem Dienst-Client der Framework-Vorrichtung betrieben wird und eine Benutzer-Schnittstellenvorrichtung enthält, die so eingerichtet ist, dass sie Zugriff einrichtet und Informationen über die Vielzahl von Middleware-Elementen einschließlich der Vielzahl gesteuerter Vorrichtungen erfasst, so dass die Dienste der gesteuerten Vorrichtungen über die Framework-Vorrichtung angefordert werden können.

3. Dienst-Framework-Vorrichtung eines Heimnetzes nach Anspruch 2, wobei Datenkommunikation zwischen jedem Element der Framework-Vorrichtung und der Anwendung so eingerichtet ist, dass sie eine Schnittstelle eines unabhängigen Standards verwendet, die eine offene Anwendungs-Programmierschnittstelle (Open Application Programming Interface) ist.

4. Dienst-Framework-Vorrichtung eines Heimnetzes nach Anspruch 1, wobei die Framework-Vorrichtung des Weiteren einen Dienst-Administrator (122) umfasst, der so eingerichtet ist, dass er das Dienstprofil von der zweiten Schnittstelle empfängt, das Dienstprofil in dem Dienstprofil-Register registriert und Funktionen, wie Erzeugung, Korrektur, Löschung und Suche des Dienstprofils ausführt, so dass die gesteuerten Vorrichtungen mit den Dienstprofil des Dienst-Administrators gesteuert werden können.

5. Dienst-Framework-Vorrichtung eines Heimnetzes nach Anspruch 4, die des Weiteren umfasst:
einen Vorrichtungs-Administrator (121) zum Einrichten virtueller Vorrichtungen, die mit dem Dienstprofil der Framework-Vorrichtung gesteuert werden; und
eine Liste (123) virtueller Vorrichtungen, die Informationen über die virtuellen Vorrichtungen speichert;
wobei die Liste virtueller Vorrichtungen von dem Vorrichtungs-Administrator generiert und gesteuert wird, so dass der Vorrichtungs-Administrator das Dienstprofil der virtuellen Vorrichtungen aus dem Dienstprofil-Register lesen kann und die Framework-Vorrichtung durch Ausführen die Dienste ansteuern kann.

6. Dienst-Framework-Vorrichtung eines Heimnetzes nach Anspruch 4, wobei der Dienst-Administrator so eingerichtet ist, das er Heim-Situationen auf Echtzeitbasis über einen Umgebungssensor überwacht, verschiedene Umgebungsdaten sammelt, die Daten auf Echtzeitbasis analysiert und diagnostiziert, Dienstinformationen zum Ansteuern der gesteuerten Vorrichtungen herleitet und ein Dienstprofil auf Basis der Dienst-Informationen in dem Dienstprofil-Register registriert.

7. Dienst-Framework-Vorrichtung eines Heimnetzes nach Anspruch 5, wobei der Dienst-Administrator des Weiteren einen Dienstprofil-Manager (124) umfasst, der so konfiguriert ist, dass er ein Dienstprofil der virtuellen Vorrichtung verwaltet und Funktionen der Erzeugung, Korrektur, Löschung und Suche des Dienstprofils erfüllt, so dass die zweite Schnittstelle das Dienstprofil empfängt, wobei der Dienstprofil-Manager das Dienstprofil in dem Dienstprofil-Register registriert, das Dienstprofil der entsprechenden virtuellen Vorrichtung aus dem Dienstprofil-Register liest und das Dienstprofil in Reaktion auf eine Anforderung des Vorrichtungs-Administrators sendet.

8. Dienst-Framework-Vorrichtung eines Heimnetzes nach Anspruch 6, wobei die zweite Schnittstelle so eingerichtet ist, dass sie, wenn ein Dienst für das entsprechende Dienstprofil von dem Dienst-Administrator angefordert wird, einen Nutzdatenteil der Dienstprofil-Basis in Daten der Middleware-Basis umwandelt, und die erste Schnittstelle so eingerichtet ist, dass sie die umgewandelten Daten empfängt und die umgewandelten Daten weiter in eine Nachricht der Middleware-Basis umwandelt, so dass die gesteuerten Vorrichtungen durch die Middleware gesteuert werden.

9. Verfahren zum Steuern eines Heimnetzes (100), das einen Framework zum Integrieren und Steuern einer Vielzahl von Middleware-Elementen, die in einer Vielzahl gesteuerter Vorrichtungen enthalten ist, und eine Anwendung (110, 112, 114) enthält, die eine Benutzerschnittstellenvorrichtung aufweist, die von einem Dienst-Client des Frameworks betrieben wird, wobei es umfasst:
Durchführen (S 230) einer Operation der Umwandlung einer Middleware-Nachricht, die eine Nachricht einer Middleware-Basis der gesteuerten Vorrichtungen in eine gemeinsame Nachricht der Framework-Basis umwandelt;
Durchführen (S 250) einer Operation der Umwandlung von Middleware-Nutzdaten, die einen Nutzdatenteil der Middleware-Basis in ein Dienstprofil umwandelt, indem sie die Nachricht aus dem Schritt der Umwandlung der Middleware-Nachricht analysiert;
Durchführen einer Speicheroperation, die das Dienstprofil speichert; und
Durchführen einer Steueroperation, die die gesteuerten Vorrichtungen mit dem Dienstprofil des Frameworks steuert.

10. Verfahren nach Anspruch 9, wobei Datenkommunikation zwischen allen Elementen des Frameworks und jeder Anwendung eine Schnittstelle eines unabhängigen Standards verwendet, die eine offene Anwendungs-Programmierschnittstelle (Open Application Programming Interface) ist.

11. Verfahren nach Anspruch 9, die des Weiteren Durchführen einer Operation des Überwachens von Heim-Situationen auf Echtzeitbasis über einen Umgebungs-Sensor, des Sammelns verschiedener Umgebungsdaten, des Analysierens und Diagnostizierens der Daten auf Echtzeitbasis, des Herleitens von Dienstinformationen zum Ansteuern der gesteuerten Vorrichtungen und des Registrierens eines Dienstprofils auf Basis der Dienstinformationen in einem Dienstprofil-Register umfasst.

12. Verfahren nach Anspruch 9, wobei die Steueroperation einschließt:
Einrichten einer virtuellen Vorrichtung für jede der gesteuerten Vorrichtungen, die mit jeweiligen Dienstprofilen in dem Framework gesteuert werden;
Auswählen eines der jeweiligen Dienstprofile für die virtuelle Vorrichtung; und
Steuern der gesteuerten Vorrichtungen gemäß dem ausgewählten Dienstprofil.

13. Verfahren nach Anspruch 12, wobei der Schritt des Steuerns der gesteuerten Vorrichtungen umfasst:
Durchführen (S 340) einer Operation der Umwandlung von Dienstprofil-Nutzdaten, die einen Nutzdatenteil einer Dienstprofil-Basis der gesteuerten Vorrichtungen in ein Dienstprofil der Middleware-Basis umwandelt; und
Durchführen (S 360) einer Operation der Umwandlung der Dienstprofil-Nachricht, die eine Nachricht einer Dienstprofil-Basis der gesteuerten Vorrichtungen in eine Nachricht der Middleware-Basis umwandelt;
Durchführen einer Steueroperation, die die gesteuerten Vorrichtungen mit den Middleware-Elementen steuert.

## Revendications

1. Dispositif de structure de services (120) d'un réseau domestique (100) pour intégrer et commander plusieurs intergiciels compris dans plusieurs dispositifs commandés (130b, 132b, 134b), comprenant un registre de profil de services (125) contenant un profil de services des dispositifs commandés ;
**caractérisé par** :
- une première interface (130a, 132a, 134a) conçue pour convertir un message ayant une base d'intergiciel en un message commun ayant une base de structure ; et
- une seconde interface (126) conçue pour convertir une partie données utiles de la base d'intergiciel en un profil de services, et pour stocker le profil de services dans le registre de profil de services en analysant le message transmis par la première interface ;
dans lequel les dispositifs commandés sont commandés par le profil de services du dispositif de structure.

2. Dispositif de structure de services d'un réseau domestique selon la revendication 1, comprenant en outre une application (110, 112, 114) actionnée par un client des services du dispositif de structure, et comprenant un dispositif d'interface utilisateur conçu pour donner l'accès et recueillir des informations concernant les intergiciels incluant les dispositifs commandés, de sorte que les services des dispositifs commandés puissent être sollicités par le biais du dispositif de structure.

3. Dispositif de structure de services d'un réseau domestique selon la revendication 2, dans lequel la communication de données entre chaque élément du dispositif de structure et l'application est conçue de manière à utiliser une interface standard indépendante qui consiste en une interface de programmation de type application ouverte.

4. Dispositif de structure de services d'un réseau domestique selon la revendication 1, dans lequel le dispositif de structure comprend en outre un administrateur de services (122) conçu de manière à recevoir le profil de services depuis la seconde interface, enregistrer le profil de services dans le registre de profil de services, et traiter des fonctions comme la création, la correction, l'effacement et la recherche du profil de services de sorte que les dispositifs commandés puissent être commandés par le profil de services de l'administrateur de services.

5. Dispositif de structure de services d'un réseau domestique selon la revendication 4, comprenant en outre :
- un administrateur de dispositifs (121) pour régler des dispositifs virtuels qui sont commandés par le profil de services du dispositif de structure ; et
- une liste de dispositifs virtuels (123) qui contient des informations concernant les dispositifs virtuels ;
dans lequel la liste de dispositifs virtuels est générée et commandée par l'administrateur de dispositifs, permettant ainsi à l'administrateur de dispositifs de lire le profil de services des dispositifs virtuels dans le registre de profil de services, et d'actionner le dispositif de structure en exécutant les services.

6. Dispositif de structure de services d'un réseau domestique selon la revendication 4, dans lequel l'administrateur de services est conçu pour contrôler des situations de domotique en temps réel par le biais d'un capteur d'environnement, à accumuler diverses données d'environnement, à analyser et à diagnostiquer les données en temps réel, à dériver des informations de services afin d'actionner les dispositifs commandés, et à enregistrer un profil de services en fonction des informations de services dans le registre de profil de services.

7. Dispositif de structure de services d'un réseau domestique selon la revendication 5, dans lequel l'administrateur de services comprend en outre un gestionnaire de profil de services (124) qui est configuré de manière à gérer un profil de services du dispositif virtuel, et réalise des fonctions de création, de correction, d'effacement et de recherche du profil de services de sorte que la seconde interface reçoive le profil de services, lequel gestionnaire de profil de services enregistre le profil de services dans le registre de profil de services, lit le profil de services du dispositif virtuel correspondant dans le registre de profil de services, et transmet le profil de services répondant à une requête de l'administrateur de dispositif.

8. Dispositif de structure de services d'un réseau domestique selon la revendication 6, dans lequel la seconde interface est conçue pour convertir, dans le cas où un service pour le profil de services correspondant est requis par l'administrateur de services, une partie données de données utiles ayant une base de profil de services en données ayant une base d'intergiciel tandis que la première interface est conçue pour recevoir les données converties et pour convertir une fois encore les données converties en un message ayant une base d'intergiciel de sorte que les dispositifs commandés soient commandés par le intergiciel.

9. Procédé de commande d'un réseau domestique (100) comportant une structure pour intégrer et commander plusieurs intergiciels compris dans plusieurs dispositifs commandés, et une application (110, 112, 114) possédant un dispositif de type interface d'utilisateur actionnée par un client des services de la structure, lequel consiste à :
- (S230) effectuer une opération de conversion de message d'intergiciel qui convertit un message ayant une base d'intergiciel des dispositifs commandés en un message commun ayant une base de structure ;
- (S250) effectuer une opération de conversion de données utiles d'intergiciel qui convertit une partie données utiles ayant une base d'intergiciel en un profil de services en analysant le message issu de l'étape de conversion de message d'intergiciel ;
- effectuer une opération d'enregistrement qui enregistre le profil de services; et
- effectuer une opération de commande qui permet de commander les dispositifs commandés par le profil de services de la structure.

10. Procédé selon la revendication 9, dans lequel la communication de données entre chaque élément de la structure et chaque application fait appel à une interface standard indépendante qui consiste en une interface de programmation de type application ouverte.

11. Procédé selon la revendication 9, consistant en outre à effectuer une opération de contrôle des situations de domotique en temps réel par le biais d'un capteur d'environnement, à accumuler diverses données d'environnement, à analyser et à diagnostiquer les données en temps réel, à dériver des informations de services afin d'actionner les dispositifs commandés, et à enregistrer un profil de services en fonction des informations de services dans le registre de profil de services.

12. Procédé selon la revendication 9, dans lequel l'opération de commande consiste à :
- définir un dispositif virtuel pour chacun des dispositifs commandés qui sont commandés par les profils de services respectifs dans la structure ;
- choisir un des profils de services respectifs pour le dispositif virtuel ; et
- commander les dispositifs commandés en fonction du profil de services choisi.

13. Procédé selon la revendication 12, dans lequel l'étape de commande des dispositifs commandés consiste en outre à :
- (S340) effectuer une opération de conversion de données utiles de profil de services qui convertit une partie données de données utiles ayant une base de profil de services des dispositifs commandés en un profil de services ayant une base d'intergiciel ;
- (S360) effectuer une opération de conversion de message de profil de services qui convertit un message ayant une base de profil de services des dispositifs commandés en un message ayant une base d'intergiciel ; et
- effectuer une opération de commande qui permet de commander les dispositifs commandés avec les intergiciels.
